# NEUE EUROPÄISCHE PATENTSCHRIFT

(11) **EP 0 881 551 B2**
(45) Veröffentlichungstag und Bekanntmachung des Hinweises auf die Entscheidung über den Einspruch: **15.01.2014**
(45) Hinweis auf die Patenterteilung: 02.07.2003
(21) Anmeldenummer: 98107463.6
(22) Anmeldetag: 23.04.1998
(51) Int. Cl.: G05B 19/042

(54) **Einrichtung zur Leistungsversorgung von Motoren eines Roboters**
Power supply device for the motors of a robot
Dispositif d'alimentation des moteurs d'un robot

(30) Priorität: 28.05.1997 DE 19722318
(43) Veröffentlichungstag der Anmeldung: 02.12.1998
(73) Patentinhaber: KUKA Roboter GmbH, 86165 Augsburg (DE)
(72) Erfinder: Roth, Stefan, 86485 Eisenbrechtshofen (DE)
(74) Vertreter: Schlotter, Alexander Carolus Paul

(56) Entgegenhaltungen:
- EP-A- 0 376 738
- DE-A- 4 224 755
- DE-C- 19 522 933
- GB-A- 2 283 836
- US-A- 4 757 245
- US-A- 4 794 513
- US-A- 4 825 133
- US-A- 5 130 631
- 'Einchip-Controller für das SERCOS-Interface' E. KIEL ET AL 6/1992, Seite 50-59

## Beschreibung

Die Erfindung betrifft einen Roboter nach dem Oberbegriff des Anspruchs 1

Bisher werden Roboter mit einer einzigen, für sämtliche Motoren gemeinsamen Einrichtung zur Leistungsversorgung versehen, wobei Servoverstärker in einem gemeinsamen Schaltschrank angeordnet sind, der wegen seiner Größe und wegen seines Gewichts außerhalb des Roboterarbeitsraumes installiert ist. Die Servoverstärker werden mit analogen Signalen oder Feldbussen angesteuert.

Nachteilig ist, daß ein sehr hoher Aufwand für die Verkabelung gegeben ist, darüber hinaus elektro-magnetische und leitungsgebundene Störungen nicht ausgeschlossen werden können und berücksichtigt werden müssen. Auch ist ein hoher Aufwand für Kühlung und Schutzklasse zu leisten. Darüber hinaus weisen die bekannten Leistungsteile einen hohen Platzbedarf auf und sind nicht flexibel handhabbar oder erweiterbar.

Aus der Druckschrift US 5,130,631 ist ein Roboter mit mehreren Motoren, mit Leistungseinheit für jeden Motor und mit einer Steuereinheit bekannt, wobei die Leistungseinheiten und die Steuereinheit über einen Bus verbunden sind. Aus der Druckschrift US 4,794,513 ist ein Roboter bekannt, bei dem Positionsaufnehmer und eine Steuereinheit Ober eine Ringleitung verbunden sind. Aus der Druckschrift EP 0 376 738 ist ein Papierverarbeitungssystem Bekannt, bei dem Leistungskomponenten und eine Steuereinheit durch eine Ringleitung verbunden sind.

Der Erfindung liegt daher die Aufgabe zugrunde, einen Roboter mit einer Einrichtung zur Leistungssteuerung von Motoren eines Roboters zu schaffen, bei der unter Vermeidung der vorgenannten Nachteile ein möglichst geringer Aufwand, insbesondere bei der Verkabelung, möglich ist und der Betrieb möglichst geringe elektromagnetische und leistungsgebundene Störungen verursacht sowie ein hoher Wirkungsgrad gegeben ist.

Erfindungsgemäß wird die genannte Aufgabe bei einen Roboter der eingangs genannten Art dadurch gelöst, daß für jeden Motor eine eigene Leistungseinheit vorgesehen ist und die Leistungseinheiten miteinander und mit der Steuereinheit über eine Ringleitung verbunden sind. Erfindungsgemäß sind zwei Leistungseinheiten miteinander jeweils durch eine Hin- und eine Rückleitung verbunden.

Durch die verteilte Ausgestaltung der Einrichtung zur Leistungsversorgung durch einzelne Leistungseinheiten für jeden Motor und Verbindung derselben mit einer Steuereinheit über eine Ringleitung wird es zunächst möglich, die einzelnen Leistungsteile nahe am Roboter selbst und insbesondere nahe an den einzelnen ihnen zugeordneten Motoren vorzusehen. Es wird hierdurch ein geringer Aufwand für die Verkabelung ermöglicht. Dadurch werden elektromagnetische und leitungsgebundene Störungen weitgehend reduziert, da durch kurze Motorleitungen nur geringe Umladeströme verursacht werden. Weiterhin kann durch die verteilte Anordnung der Leistungseinheiten der Aufwand für Kühlung und zur Erzielung der erforderlichen Schutzklasse gering gehalten werden. Die Leistungseinheiten haben einen geringen Platzbedarf und können flexibel erweitert werden. Verbleibende Leitungen sind mit geringem Aufwand steckbar.

In einer bevorzugten Ausgestaltung ist vorgesehen, daß die Leistungseinheiten über eine Netzleitung direkt an ein Spannungsnetz anschließbar sind. Hierdurch kann die Energieversorgung unmittelbar durch die Netzspannung erfolgen, soweit diese und die Verstärkerspannung kompatibel sind, wie es beispielsweise bei einer Verstärkerspannung in 600 V-Technik im Hinblick auf das europäische Drehstromnetz mit 3 x 400V der Fall ist. Damit wird der Aufwand bei der Energieverteilung reduziert und die Versorgungsspannung ist leicht zu handhaben, insbesondere zu schalten und zu stecken. Ein weiterer Vorteil der Erfindung liegt darin, daß die Verlustwärme passiv abgeführt werden kann und daher keine aktiven Kühlelemente wie Ventilatoren oder Wärmetauscher erforderlich sind. In weiterer bevorzugter Ausgestaltung ist vorgesehen, daß die Leistungseinheiten eine eigene Gleichrichtung aufweisen und damit autark sind.

Durch die Verbindung der Leistungseinheiten untereinander mittels eines logischen Rings oder eine Ringleitung werden alle Leistungseinheiten oder Servoverstärker durch einen schnellen deterministischen Bus vernetzt, der über vorhandene SSI-Schnittstellen an der Steuereinheit angeschlossen werden kann. Es ergibt sich eine Repeater-Funktion, bei der jede Leistungseinheit automatisch zu einer Trennstelle wird, an der das Kommunikationskabel ohne technische Einschränkungen angesteckt werden kann, und damit ist eine flexible Erweiterungsfähigkeit im Bus gegeben. Darüber hinaus wird hierdurch eine einfache Überwachung der Funktion der einzelnen Leistungseinheiten erzielt: Die Daten erreichen ihr Ziel, d.h. die entsprechende Leistungseinheit nur, wenn jede Leistungseinheit funktionsfähig ist; wenn eine Leistungseinheit ausfällt, d.h. nach einer vorgegebenen kritischen Zeit keine Rückmeldung erfolgt, so erkennt die Steuereinheit, daß ein Fehler vorliegt, und kann den Roboter in geordneter Weise stillsitzen. Gleiches ist der Fall, wenn Störungen auf der Ringleitung auftreten. Ein weiterer Vorteil der erfindungsgemäßen Ringarchitektur liegt darin, daß die Adressierung der Leistungseinheiten auf dem Ring durch ihre Anordnung im Ring gegeben ist und daher eine logische Zuordnung über die Software erfolgen kann, so daß der Anwender nicht gezwungen ist, den einzelnen Leistungseinheiten Adressen zu vergeben.

Die genannte Ringarchitektur wird insbesondere dadurch gebildet, daß die Ringleitung derart ausgebildet ist, daß die Steuereinheit mit einer Leistungseinheit über eine Hin- und eine Rückleitung verbunden ist, daß die erste Leistungseinheit mit einer zweiten Leistungseinheit durch jeweils eine Hin- und Rückleitung verbunden ist und/oder daß zweite und weitere Leistungseinheiten, bis auf eine letzte Leistungseinheit, mit einer vorangehenden und einer nachfolgenden Leistungseinheit jeweils über eine Hin- und eine Rückleitung verbunden sind.

In weiterer bevorzugter Ausgestaltung ist vorgesehen, daß die Ringleitung als serielle Leitung ausgebildet ist, wobei insbesondere die Ringleitung durch symmetrische Aderpaare oder Lichtwellenleiter ausgebildet ist. Eine derartige Leitung erreicht eine hohe Störfestigkeit, was bei parallelen Leitungen nicht der Fall ist, da diese nicht verdrillt und symmetriert werden können.

In weiterer bevorzugter Ausgestaltung ist vorgesehen, daß jede Leistungseinheit einen eigenen Signalprozessor aufweist. Über diesen Prozessor kommuniziert die Leistungseinheit mit der Steuerung über seine Schnittstellen, an denen die genannte Ringleitung angeschlossen ist. In weiterer bevorzugter Ausgestaltung ist vorgesehen, daß in den Leistungseinheiten Überwachungseinheiten zur Überwachung von Gebern integriert sind.

Insgesamt wird durch die erfindungsgemäße Ausbildung von vorteilhafterweise über einen seriellen Bus verbundenen, verteilten Leistungseinheiten bei geringem Aufwand eine hohe Störunempfindlichkeit erreicht. Durch die Ringstruktur des Busses ist eine Adresskonfiguration durch den Anwender überflüssig. Es ergibt sich die Möglichkeit, mit großen Datenmengen über große Entfernungen zu kommunizieren, so daß es möglich ist, die Leistungseinheiten aus der eigentlichen Steuerung auszulagern und als eigenständige Einheiten vorzusehen. Hierdurch ist es weiterhin möglich, im Rahmen der Leistungsfähigkeit des Busses beliebig viele Leistungseinheiten miteinander zu verschalten. Darüber hinaus können die Leistungseinheiten, wie gesagt, unmittelbar an den Antrieben angeordnet werden, so daß auch bei verteilten Systemen mit großer Ausdehnung kurze Motorleitungen zu realisieren sind. Dabei hat die Maschinenkonfiguration auf diese Weise keinen Einfluß auf die elektromagnetische Verträglichkeit und die leitungsgebundenen Störungen.

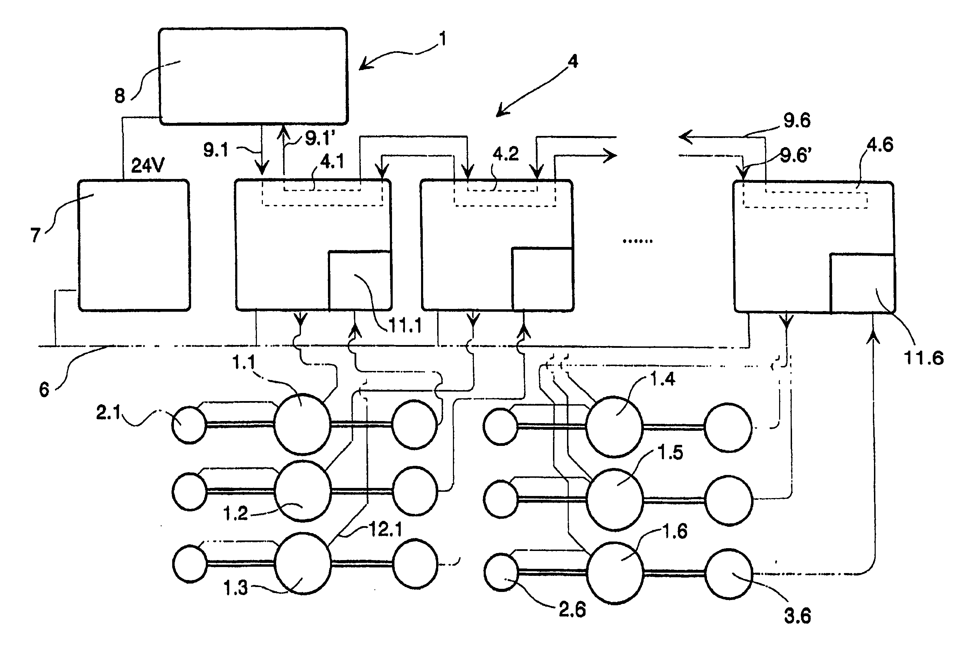

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt die einzige Figur
eine schematische Darstellung der erfindungsgemäßen Einrichtung zur Leistungsversorgung.

Ein Roboter weist in Standardausführung im allgemeinen sechs Motoren 1.1-1.6 mit Bremsen 2.1-2.6 auf; die Motoren 1.1-1.6 sind also als Bremsmotoren ausgebildet. Sie dienen zur Steuerung der üblicherweise sechs Achsen eines Roboters. Wenn Zusatzachsen vorgesehen sind, so können auch weitere Motoren vorhanden sein und im Rahmen der Erfindung in gleicher Weise versorgt werden, wie dies im folgenden beschrieben wird. Jedem Motor 1.1-1.6 ist ein Resolver 3.1-3.6 zugeordnet, der die Position der Motoren und damit der durch diese gesteuerten Achsen des Roboters feststellt. Zur Leistungsversorgung der Motoren ist eine Leistungseinheit 4 vorgesehen, die erfindungsgemäß durch einzelne Leistungseinheiten 4.1-4.6 oder Servo-Verstärker ausgebildet ist, wobei jede Leistungseinheit 4.1-4.6 einem der Motoren 1.1-1.6 zugeordnet ist (der Übersichtlichkeit halber sind in der Figur nur die Leistungseinheiten 4.1, 4.2 und 4.6 dargestellt, während die weiteren Leistungseinheiten punktiert angedeutet sind). Die Leistungseinheiten 4.1-4.6 sind im dargestellten Ausführungsbeispiel unmittelbar über eine Netzleitung 6 mit dem Spannungsnetz verbunden. Dies ist möglich, wenn die Leistungseinheiten 4.1-4.6 in 600V-Technik ausgeführt sind, so daß ein direkter Netzanschluß an ein Netz mit 3 x 400V möglich ist. Damit ergibt sich weiterhin der Vorteil, daß nur eine Wechselspannung bzw. Drehstromspannung zum Roboter bzw. zu dessen Motoren geführt werden muß. Für andersartige Netze kann zur Anpassung der Spannung eine Anpassungseinheit in Form eines Transformators vorgesehen sein.

Es ist weiterhin ein Netzteil 7 vorgesehen, mit dem die über die Leitung 6 zugeführte Netzspannung in DC-Steuerspannung von 24V umgewandelt wird, die beispielsweise zur Versorgung einer Steuereinheit 8 in Form einer digitalen Steuereinheit auf Mikroprozessorbasis dient. Neben der Ausbildung der Einrichtung zur Leistungsversorgung durch modulare Leistungseinheiten 4.1-4.6 für jeden Motor 1.1-1.6 ist ein weiterer Kernpunkt der Erfindung die Verbindung der Leistungseinheiten 4.1-4.6 untereinander und mit der Steuereinheit 8 über einen logischen Ring bzw. über eine Ringleitung 9.1, 9.1'-9.6, 9.6', die dabei so ausgestaltet ist, daß eine Hinleitung 9.1 und eine Rückleitung 9.1' von der Steuereinheit 8 zu der ersten Leistungseinheit 4.1 geführt ist, von dieser eine Hinund eine Rückleitung 9.2, 9.2' zur zweiten Steuereinheit 4.2, von dieser eine Hin- und eine Rückleitung 9.3, 9.3' zur nächsten Steuereinheit etc. bis zur sechsten oder letzten Steuereinheit 4.6 mit der Hin- und Rückleitung 9.6, 9.6'.

In den Leistungseinheiten 4.1-4.6 sind weiterhin Überwachungseinheiten 11.1-11.6 für die Resolver 3.1-3.6 integriert, wobei die Verbindung zwischen den Überwachungseinheiten 11.1-11.6 und den Resolvern 3.1-3.6 über paarige verdrillte Leitungen 12.1-12.6 erfolgt.

## Patentansprüche

1. Roboter mit mehreren Motoren, mit einer Steuereinheit, und mit einer durch eine eigene Leistungseinheit (4.1-4.6) für jeden Motor (1.1-1.6) gebilde Einrichtung zur Leistungsversorgung der Motoren **gekennzeichnet durch** eine die Steuereinheit (8) mit den Leistungseinheiten (4.1-4.6) und diese miteinander verbindende Ringleitung (9.1, 9.1'-9.6, 9.6'),
wobei zwei Leistungseinheiten (4.1-4.6) miteinander jeweils **durch** eine Hin- und eine Rückleitung (9.1, 9.1'; 9.2, 9.2' ...; 9.6, 9.6') verbunden sind.

2. Roboter nach Anspruch 1, **dadurch gekennzeichnet, dass** die Ringleitung derart ausgebildet ist, dass die Steuereinheit (8) mit einer Leistungseinheit (4.1) über eine Hin- und eine Rückleitung (9.1, 9.1') verbunden ist, wobei Hin- und Rückleitung in einem Schlauchkabel verlegt sein können.

3. Roboter nach Anspruch 2, **dadurch gekennzeichnet, dass** die erste Leistungseinheit (4.1) mit einer zweiten Leistungseinheit (4.2) durch jeweils eine Hin-und Rückleitung (9.2, 9.3) verbunden ist.

4. Roboter nach einem der Ansprüche 1-3, **dadurch gekennzeichnet, dass** zweite und weitere Leistungseinheiten (4.2-4.5), bis auf eine letzte Leistungseinheit (4.6), mit einer vorangehenden und einer nachfolgenden Leistungseinheit (4.1, 4.3; ...; 4.4, 4.6) jeweils über eine Hin- und eine Rückleitung (9.2, 9.2'; 9.3, 9.3'; 9.5, 9.5', 9.6, 9.6') verbunden sind.

5. Roboter nach einem der Ansprüche 1-4, **dadurch gekennzeichnet, dass** eine letzte Leistungseinheit (4.6) nur mit einer vorangehenden Leistungseinheit (4.5) über jeweils eine Hin- und Rückleitung (9.6, 9.6') verbunden ist und die Ringleitung innerhalb der letzten Leistungseinheit (4.6) von der zu dieser führenden Hinleitung (9.6) zur von dieser fortführenden Rückleitung (9.6') geführt ist.

6. Roboter nach einem der vorangehenden Ansprüche, **dadurch gekennzeichnet, dass** die Ringleitung (9.1, 9.1'-9.6, 9.6') als serielle Leitung ausgebildet ist.

7. Roboter nach einem der vorangehenden Ansprüche, **dadurch gekennzeichnet, dass** die Ringleitung (9.1, 9.1'-9.6, 9.6') durch symmetrische Aderpaare oder Lichtwellenleiter ausgebildet ist.

8. Roboter nach einem der vorangehenden Ansprüche, **dadurch gekennzeichnet, dass** jede Leistungseinheit (4.1-4.6) einen eigenen Signalprozessor aufweist.

9. Roboter nach einem der vorangehenden Ansprüche, **dadurch gekennzeichnet, dass** in den Leistungseinheiten (4.1-4.6) Überwachungseinheiten (11.1-11.6) zur Überwachung von Gebern (Resolvern 3.1-3.6) integriert sind.

10. Roboter nach einem der vorangehenden Ansprüche, **dadurch gekennzeichnet, dass** die Leistungseinheiten (4.1-4.6) Stromregler aufweisen.

11. Roboter nach einem der vorangehenden Ansprüche, **dadurch gekennzeichnet, dass** die Leistungseinheiten (4.1-4.6) über eine Netzleitung (6) direkt an ein Spannungsnetz anschließbar sind.

12. Roboter nach einem der vorangehenden Ansprüche, **dadurch gekennzeichnet, dass** jede Leistungseinheit (4.1-4.6) einen eigenen Gleichrichter aufweist.

## Claims

1. Robot with several motors, having a control unit and a device for the power supply of the motors formed by an individual power unit (4.1 - 4.6) for each motor (1.1 - 1.6) **characterized by** a ring circuit (9.1, 9.1' - 9.6, 9.6') connecting the control unit (8) to the power units (4.1 - 4.6) and the latter to one another, wherein
two power units (4.1 - 4.6) are in each case interconnected by an outgoing and a return line (9.1, 9.1'; 9.2, 9.2' ....; 9.6, 9.6').

2. Device according to claim 1, **characterized in that** the ring circuit is constructed in such a way that the control unit (8) is connected to a power unit (4.1) by an outgoing and a return line (9.1, 9.1') and the outgoing and return lines can be laid in a hose cable.

3. Device according to claim 2, **characterized in that** the first power unit (4.1) is connected to a second power unit (4.2) by in each case one outgoing and one return line (9.2, 9.3).

4. Device according to one of the claims 1 to 3, **characterized in that** second and further power units (4.2 - 4.5), up to a final power unit (4.6), are connected to a preceding and a following unit (4.1, 4.3; ...; 4.4, 4.6) by in each case one outgoing and one return line (9.2, 9.2', 9.3, 9.3'; 9.5, 9.5', 9.6, 9.6').

5. Device according to one of the claims 1 to 4, **characterized in that** a final power unit (4.6) is only connected with a preceding power unit (4.5) by in each case one outgoing and one return line (9.6, 9.6') and within the final power unit (4.6) the ring circuit passes from the outgoing line (9.6) leading thereto to the return line (9.6') leading therefrom.

6. Device according to one of the preceding claims, **characterized in that** the ring circuit (9.1, 9.1' - 9.6, 9.6') is constructed as a serial circuit.

7. Device according to one of the preceding claims, **characterized in that** the ring circuit (9.1, 9.1' - 9.6, 9.6') is formed by symmetrical pairs of wires or optical waveguides.

8. Device according to one of the preceding claims, **characterized in that** each power unit (4.1 - 4.6) has its own signal processor.

9. Device according to one of the preceding claims, **characterized in that** the power units (4.1 - 4.6) contain monitoring units (11.1 - 11.6) for monitoring pick-ups (resolvers 3.1 - 3.6).

10. Device according to one of the preceding claims, **characterized in that** the power units (4.1 - 4.6) have current regulators.

11. Device according to one of the preceding claims, **characterized in that** the power units (4.1 - 4.6) can be directly connected to a voltage network by means of a mains line (6).

12. Device according to one of the preceding claims, **characterized in that** each power unit (4.1 - 4.6) has its own rectifier.

## Revendications

1. Robot à moteurs multiples, comportant une unité de commande et un dispositif d'alimentation des moteurs formé par une unité d'alimentation (4.1 - 4.6) propre à chaque moteur (1.1 - 1.6), **caractérisé par** une boucle (9.1, 9.1' - 9.6, 9.6') reliant l'unité de commande (8) aux unités d'alimentation (4.1 - 4.6) et ces dernières entre elles, deux unités d'alimentation (4.1 - 4.6) étant reliées entre elles respectivement par une ligne aller et une ligne retour (9.1, 9.1'; 9.2, 9.2' ...; 9.6, 9.6').

2. Dispositif selon la revendication 1, **caractérisé en ce que** la boucle est configurée de telle façon que l'unité de commande (8) est reliée à une unité d'alimentation (4.1) par une ligne aller et une ligne retour (9.1, 9.1'), les lignes aller et retour pouvant être montées dans une gaine souple.

3. Dispositif selon la revendication 2, caratérisé en ce que la première unité d'alimentation (4.1) est reliée à une deuxième unité d'alimentation (4.2) respectivement par une ligne aller et une ligne retour (9.2, 9.3).

4. Dispositif selon l'une quelconque des revendications 1 à 3, **caractérisé en ce que** les deuxièmes unités d'alimentation et les suivantes (4.2 - 4.5), sauf une dernière unité d'alimentation (4.6), sont reliées à une unité d'alimentation précédente et suivante (4.1, 4.3; ... ; 4.4, 4.6) respectivement par une ligne aller et une ligne retour (9.2, 9.2', 9.3, 9.3', 9.5, 9.5', 9.6, 9.6').

5. Dispositif selon l'une quelconque des revendications 1 à 4, **caractérisé en ce qu'**une dernière unité d'alimentation (4.6) n'est reliée qu'à une unité d'alimentation (4.5) précédente respectivement par une ligne aller et une ligne retour (9.6, 9.6') et **en ce que** la boucle à l'intérieur de la dernière unité d'alimentation (4.6) est guidée depuis la ligne aller (9.6) conduisant à celle-ci vers la ligne retour (9.6') qui en repart.

6. Dispositif selon l'une quelconque des revendications précédentes, **caractérisé en ce que** la boucle (9.1, 9.1' - 9.6, 9.6') est configurée en ligne série.

7. Dispositif selon l'une quelconque des revendications précédentes, **caractérisé en ce que** la boucle (9.1, 9.1' - 9.6, 9.6') est constituée par des paires de conducteurs symétriques ou des fibres optiques.

8. Dispositif selon l'une quelconque des revendications précédentes, **caractérisé en ce que** chaque unité d'alimentation (4.1 - 4.6) présente son propre processeur de signal.

9. Dispositif selon l'une quelconque des revendications précédentes, **caractérisé en ce que** des unités de surveillance (11.1 - 11.6) pour la surveillance de transmetteurs (résolveurs 3.1 - 3.6) sont intégrées dans les unités d'alimentation (4.1 - 4.6).

10. Dispositif selon l'une quelconque des revendications précédentes, **caractérisé en ce que** les unités d'alimentation (4.1 - 4.6) présentent des régulateurs d'intensité du courant.

11. Dispositif selon l'une quelconque des revendications précédentes, **caractérisé en ce que** les unités d'alimentation (4.1 - 4.6) peuvent être reliées directement à un réseau d'alimentation par une ligne de réseau.

12. Dispositif selon l'une quelconque des revendications précédentes, **caractérisé en ce que** chaque unité d'alimentation (4.1 - 4.6) présente son propre redresseur de courant.
